# EUROPEAN PATENT APPLICATION

(11) **EP 3 236 633 A1**
(43) Date of publication of application: **25.10.2017**
(21) Application number: 15868984.4
(22) Date of filing: 25.06.2015
(51) Int. Cl.: H04L 29/08

(54) **METHOD AND APPARATUS FOR PROCESSING RESOURCE OPERATION REQUEST**

(30) Priority: 18.12.2014 CN 201410802096
(71) Applicant: ZTE Corporation, Shenzhen, Guangdong 518057 (CN)
(72) Inventor: YANG, Kun, Shenzhen Guangdong 518057 (CN)
(74) Representative: Novagraaf Technologies
(86) International application number: PCT/CN2015/082382
(87) International publication number: WO 2016/095472

(57) **Abstract**

Methods and devices for processing a resource operation request are provided. A first entity receives a resource operation request from a second entity, the resource operation request is used for requesting to perform an operation on a specified resource, and the resource operation request carries operation execution time of the operation on the specified resource. The first entity acquires an effective time length of the specified resource. The first entity sends a feedback message to the second entity when the first entity determines that the operation execution time does not fall within the effective time length, and the feedback message indicates a processing basis for the second entity to process the resource operation request. By the technical solution, the problem of disorder between effective time of a resource and execution time of an operation in the related communication technology is solved. The disorder between the effective time of the resource and the execution time of the operation may be avoided, so that effective execution of the resource operation request may be ensured.

## Description

### Technical Field

The present invention relates to the field of communications, and in particular to methods and devices for processing a resource operation request.

### Background

A Machine-to-Machine/Man (M2M) communication system consists of M2M nodes and an underlying network. The M2M nodes may communicate with one another through the underlying network. An M2M node may at least include an Application Entity (AE) or a Common Service Entity (CSE). The AE is a logical unit that performs a practical M2M application, and the CSE is a logical unit that manages and serves the application. An underlying Network Service Entity (NSE) provides services such as equipment management, location-based service, equipment triggering and the like for the CSE. For example, an NSE may be a Home Subscriber Server (HSS) or an MTC-Inter Working Function (MTC-IWF) entity.

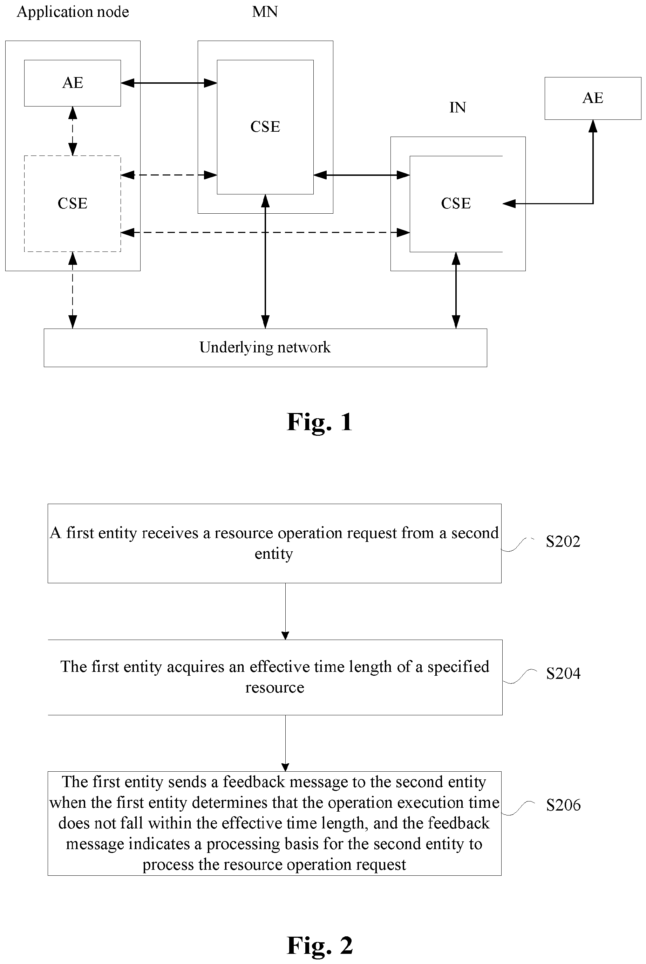

Communication between M2M applications may be implemented by interaction between CSEs. The M2M applications may need to be registered in the CSEs. The CSEs may also need to be mutually registered, so that interaction between the M2M applications may be implemented by communication between the CSEs. The architecture of an M2M system is shown in Fig. 1.

In the architecture of the M2M system, an application node is an execution node in a device, and may be embodied as, for example, an intelligent electric meter, a temperature measurement and control sensor, a fire alarm or an intelligent home appliance. A Middle Node (MN) is middleware that connects the execution node in the device to a network-side server, and may be embodied as, for example, a gateway. An Infrastructure Node (IN) is a network-side server. An application registered in the IN, i.e. an IN-AE, may be a management platform of an M2M Service Provider (M2M SP).

Application nodes may be divided into two categories according to their functions. A first category of application node is a node including CSE, while a second category of application node is a node including no CSE. An Application Dedicated Node (AND) at least includes one AE, and does not include any CSE. An Application Service Node (ASN) at least includes one AE and one CSE.

In a related communication technology, when an AE or a CSE needs to perform an operation, e.g. acquisition, updating or the like, on a resource on a target CSE, the AE or CSE may send an operation request to the target CSE. The request message may include an "operation execution time" parameter, which indicates execution time of the operation. In the resource on the target CSE, an "effective time" attribute may be included, which indicates effective time of the resource. Then, there may be a scenario in which the resource gets ineffective but the operation request has yet not been executed, which may cause an execution failure of the operation request.

For the problem of disorder between effective time of a resource and execution time of an operation in the related communication technology, there is yet no effective solution.

### Summary

Some embodiments of the present invention provide methods and devices for processing a resource operation request, so as to at least solve the problem of disorder between effective time of a resource and execution time of an operation in the related communication technology.

According to an embodiment of the present invention, a method for processing a resource operation request is provided, which may include the following acts. A first entity receives a resource operation request from a second entity, the resource operation request may be used for requesting to perform an operation on a specified resource, and the resource operation request may carry operation execution time of the operation on the specified resource. The first entity acquires an effective time length of the specified resource. The first entity sends a feedback message to the second entity when the first entity determines that the operation execution time does not fall within the effective time length, and the feedback message may indicate a processing basis for the second entity to process the resource operation request.

In an exemplary embodiment, the resource operation request may include an acquisition operation request for the specified resource or an updating operation request for the specified resource.

In an exemplary embodiment, the feedback message may carry at least one of the following information: indication information indicating an acquisition failure of the specified resource, and/or indication information indicating that a reason for an acquisition failure of the specified resource is that the operation execution time is ineffective operation execution time; or, indication information indicating unconfirmed updating of the specified resource, and/or indication information indicating that a reason for unconfirmed updating of the specified resource is that the operation execution time is ineffective operation execution time.

In an exemplary embodiment, after the act that the first entity sends the feedback message to the second entity, the method may include the following act. The first entity receives an updated resource operation request from the second entity, and the updated resource operation request may carry updated operation execution time.

In an exemplary embodiment, the act that the first entity acquires the effective time length of the specified resource may include the following acts. The first entity retrieves an "effective time" attribute of the specified resource, and acquires the effective time length of the specified resource from the "effective time" attribute.

In an exemplary embodiment, the first entity may be a CSE, and the second entity may be an AE or a CSE.

According to another embodiment of the present invention, another method for processing a resource operation request is further provided, which may include the following acts. A second entity sends a resource operation request to a first entity, the resource operation request may be used for requesting to perform an operation on a specified resource, and the resource operation request may carry operation execution time of the operation on the specified resource. The second entity receives a feedback message from the first entity, the feedback message may indicate a processing basis for the second entity to process the resource operation request, and the feedback message may be sent to the second entity by the first entity when the first entity determines that the operation execution time does not fall within effective time length of the specified resource. The second entity processes the resource operation request according to the processing basis.

In an exemplary embodiment, the resource operation request may include an acquisition operation request for the specified resource or an updating operation request for the specified resource.

In an exemplary embodiment, the feedback message may carry at least one of the following information: indication information indicating an acquisition failure of the specified resource, and/or indication information indicating that a reason for an acquisition failure of the specified resource is that the operation execution time is ineffective operation execution time; or, indication information indicating unconfirmed updating of the specified resource, and/or indication information indicating that a reason for unconfirmed updating of the specified resource is that the operation execution time is ineffective operation execution time.

In an exemplary embodiment, after the act that the second entity receives the feedback message from the first entity, the method may include the following act. The second entity cancels to send the resource operation request to the first entity; or, the second entity sends an updated resource operation request to the first entity, and the updated resource operation request may include updated operation execution time.

In an exemplary embodiment, the first entity may be a CSE, and the second entity may be an AE or a CSE.

According to another embodiment of the present invention, a device for processing a resource operation request is provided. The device may be applied to a first entity and may include a first receiving module, an acquisition module and a sending module. The first receiving module is arranged to receive a resource operation request from a second entity. The resource operation request may be used for requesting to perform an operation on a specified resource, and the resource operation request may carry operation execution time of the operation on the specified resource. The acquisition module is arranged to acquire an effective time length of the specified resource. The sending module is arranged to send a feedback message to the second entity when determining that the operation execution time does not fall within the effective time length. The feedback message may indicate a processing basis for the second entity to process the resource operation request.

In an exemplary embodiment, the resource operation request may include an acquisition operation request for the specified resource or an updating operation request for the specified resource.

In an exemplary embodiment, the feedback message may carry at least one of the following information: indication information indicating an acquisition failure of the specified resource, and/or indication information indicating that a reason for an acquisition failure of the specified resource is that the operation execution time is ineffective operation execution time; or, indication information indicating unconfirmed updating of the specified resource, and/or indication information indicating that a reason for unconfirmed updating of the specified resource is that the operation execution time is ineffective operation execution time.

In an exemplary embodiment, the device may include a second receiving module. The second receiving module is arranged to receive an updated resource operation request from the second entity. The updated resource operation request may carry updated operation execution time.

In an exemplary embodiment, the acquisition module may further be arranged to retrieve an "effective time" attribute of the specified resource and acquire the effective time length of the specified resource from the "effective time" attribute.

In an exemplary embodiment, the first entity may be a CSE, and the second entity may be an AE or a CSE.

According to another embodiment of the present invention, another device for processing a resource operation request is further provided. The device may be applied to a second entity and may include a first sending module, a receiving module and a processing module. The first sending module is arranged to send a resource operation request to a first entity. The resource operation request may be used for requesting to perform an operation on a specified resource, and the resource operation request may carry operation execution time of the operation on the specified resource. The receiving module is arranged to receive a feedback message from the first entity. The feedback message may indicate a processing basis for the second entity to process the resource operation request, and the feedback message may be sent to the second entity by the first entity when the first entity determines that the operation execution time does not fall within the effective time length of the specified resource. The processing module is arranged to process the resource operation request according to the processing basis.

In an exemplary embodiment, the resource operation request may include an acquisition operation request for the specified resource or an updating operation request for the specified resource.

In an exemplary embodiment, the feedback message may carry at least one of the following information: indication information indicating an acquisition failure of the specified resource, and/or indication information indicating that a reason for an acquisition failure of the specified resource is that the operation execution time is ineffective operation execution time; or, indication information indicating unconfirmed updating of the specified resource, and/or indication information indicating that a reason for unconfirmed updating of the specified resource is that the operation execution time is ineffective operation execution time.

In an exemplary embodiment, the device may further include a cancellation module or a first sending module. The cancellation module is arranged to cancel to send the resource operation request to the first entity. The first sending module is arranged to send an updated resource operation request to the first entity, and the updated resource operation request may include updated operation execution time.

In an exemplary embodiment, the first entity may be a CSE, and the second entity may be an AE or a CSE.

According to the embodiments of the present invention, a first entity receives a resource operation request from a second entity, the resource operation request is arranged to request to perform an operation on a specified resource, and the resource operation request carries operation execution time of the operation on the specified resource. The first entity acquires an effective time length of the specified resource. The first entity sends the feedback message to the second entity when the first entity determines that the operation execution time does not fall within the effective time length, and the feedback message indicates a processing basis for the second entity to process the resource operation request. By virtue of the technical solution, the problem of disorder between effective time of a resource and execution time of an operation in the related communication technology is solved. The disorder between the effective time of the resource and the execution time of the operation may be avoided, so that effective execution of the resource operation request may be ensured.

### Brief Description of the Drawings

The drawings described here are adopted to provide a further understanding to the present invention, and form a part of the present invention. Schematic embodiments of the present invention and descriptions thereof are adopted to explain the present invention and not intended to form limits to the present invention. In the drawings:
Fig. 1 is a diagram of the architecture of an M2M system;
Fig. 2 is a flowchart of a method for processing a resource operation request according to an embodiment of the present invention;
Fig. 3 is a structure block diagram of a device for processing a resource operation request according to an embodiment of the present invention;
Fig. 4 is a first structure block diagram of a device for processing a resource operation request according to an embodiment of the present invention;
Fig. 5 is a first flowchart of a method for processing a resource operation request according to an embodiment of the present invention;
Fig. 6 is a second structure block diagram of a device for processing a resource operation request according to an embodiment of the present invention; and
Fig. 7 is a third structure block diagram of a device for processing a resource operation request according to an embodiment of the present invention.

### Detailed Description of the Embodiments

The present invention will be described below in detail with reference to the drawings and embodiments. It is important to note that the embodiments in the present invention and characteristics in the embodiments may be combined under the condition of no conflicts.

An embodiment provides a method for processing a resource operation request. Fig. 2 is a flowchart of a method for processing a resource operation request according to an embodiment of the present invention. As shown in Fig. 2, the flow may include the following acts.

At act S202, a first entity receives a resource operation request from a second entity. The resource operation request may be used for requesting to perform an operation on a specified resource, and the resource operation request may carry operation execution time of the operation on the specified resource.

At act S204, the first entity acquires an effective time length of the specified resource.

At act S206, the first entity sends a feedback message to the second entity when the first entity determines that the operation execution time does not fall within the effective time length. The feedback message may indicate a processing basis for the second entity to process the resource operation request.

By the acts, the first entity compares the effective time length of the specified resource with the operation execution time, sent by the second entity, of the operation on the specified resource. In some embodiments, the effective time length of the specified resource may be a length of time when the specified resource is in an online, offline or standby state. When the operation execution time does not fall within the effective time length, the first entity feeds back information indicating that the operation on the specified resource is not executed to the second entity. By virtue of the technical solution, the problem of disorder between effective time of a resource and execution time of an operation in the related communication technology is solved. The disorder between the effective time of the resource and the execution time of the operation may be avoided, so that effective execution of the resource operation request may be ensured.

In an exemplary embodiment, the resource operation request may include an acquisition operation request for the specified resource or an updating operation request for the specified resource. Correspondingly, the second entity may determine an operation manner of the acquisition operation request for the specified resource or the updating operation request for the specified resource.

In an exemplary embodiment, the feedback message may include indication information indicating an acquisition failure of the specified resource. In another exemplary embodiment, the feedback message may also or further include indication information indicating that a reason for an acquisition failure of the specified resource is that the operation execution time is ineffective operation execution time.

In an exemplary embodiment, the feedback message may include indication information indicating unconfirmed updating of the specified resource. In another exemplary embodiment, the feedback message may also or further include indication information indicating that a reason for unconfirmed updating of the specified resource is that the operation execution time is ineffective operation execution time.

When the resource operation request is the updating operation request for the specified resource, in an exemplary embodiment, the first entity may send the feedback message to the second entity, and the first entity may receive an updated resource operation request from the second entity. The updated resource operation request may carry updated operation execution time. In this way, the first entity may be able to execute a corresponding operation on the specified resource according to the updated resource operation request.

Act S204 involves an operation that the first entity acquires the effective time length of the specified resource. It is important to note that the effective time length of the specified resource may be acquired in multiple manners, and the embodiment provides a manner as an example. In an exemplary embodiment, the first entity retrieves an "effective time" attribute of the specified resource, and acquires the effective time length of the specified resource from the "effective time" attribute.

In an exemplary embodiment, the first entity may be a CSE, and the second entity may be an AE or a CSE.

Another embodiment provides a device for processing a resource operation request. The device is arranged to implement the abovementioned embodiment and preferred implementation modes, and what has been described will not be elaborated. For example, term "module", used below, may be a combination of software and/or hardware capable of realizing a preset function. Although the device described in the following embodiment is preferably implemented with software, implementation with hardware or a combination of the software and the hardware is also possible and conceivable.

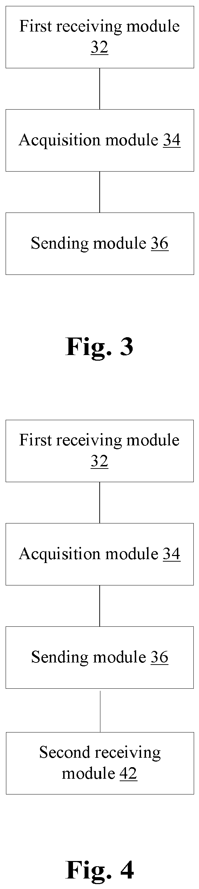

Fig. 3 is a structure block diagram of a device for processing a resource operation request according to an embodiment of the present invention. The device is applied to a first entity. As shown in Fig. 3, the device may include a first receiving module 32, an acquisition module 34 and a sending module 36. The first receiving module 32 is arranged to receive a resource operation request from a second entity. The resource operation request is used for requesting to perform an operation on a specified resource, and the resource operation request carries operation execution time of the operation on the specified resource. The acquisition module 34 is arranged to acquire an effective time length of the specified resource. The sending module 36 is arranged to send a feedback message to the second entity when determining that the operation execution time does not fall within the effective time length. The feedback message may indicate a processing basis for the second entity to process the resource operation request.

In an exemplary embodiment, the resource operation request may include an acquisition operation request for the specified resource or an updating operation request for the specified resource.

In an exemplary embodiment, the feedback message may carry at least one of the following information: indication information indicating an acquisition failure of the specified resource, and/or indication information indicating that a reason for an acquisition failure of the specified resource is that the operation execution time is ineffective operation execution time; or, indication information indicating unconfirmed updating of the specified resource, and/or indication information indicating that a reason for unconfirmed updating of the specified resource is that the operation execution time is ineffective operation execution time.

Fig. 4 is a first structure block diagram of a device for processing a resource operation request according to an embodiment of the present invention. As shown in Fig. 4, besides all the modules shown in Fig. 3, the device may further include a second receiving module 42. The second receiving module 42 is arranged to receive an updated resource operation request from the second entity, and the updated resource operation request may carry updated operation execution time.

In an exemplary embodiment, the acquisition module 34 may be arranged to retrieve an "effective time" attribute of the specified resource and acquire the effective time length of the specified resource from the "effective time" attribute.

In an exemplary embodiment, the first entity may be a CSE, and the second entity may be an AE or a CSE.

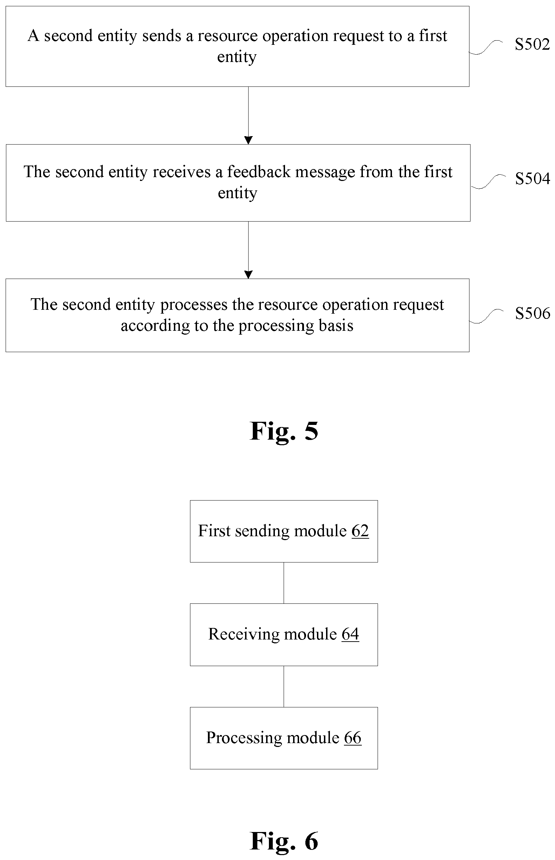

Another embodiment provides another method for processing a resource operation request. Fig. 5 is a first flowchart of a method for processing a resource operation request according to an embodiment of the present invention. As shown in Fig. 5, the flow may include the following acts.

At act S502, a second entity sends a resource operation request to a first entity. The resource operation request is used for requesting to perform an operation on a specified resource, and the resource operation request carries operation execution time of the operation on the specified resource.

At act S504, the second entity receives a feedback message from the first entity. The feedback message indicates a processing basis for the second entity to process the resource operation request, and the feedback message is sent to the second entity by the first entity when the first entity determines that the operation execution time does not fall within the effective time length of the specified resource.

At act S506, the second entity processes the resource operation request according to the processing basis.

By the acts, the operation execution time, sent by the second entity, of the operation on the specified resource is compared with the effective time length of the specified resource. When the operation execution time does not fall in the effective time length, the first entity feeds back information indicating that the operation on the specified resource is not executed to the second entity. By virtue of the technical solution, the problem of disorder between effective time of a resource and execution time of an operation in the related communication technology is solved. The disorder between the effective time of the resource and the execution time of the operation may be avoided, so that effective execution of the resource operation request may be ensured.

In an exemplary embodiment, the resource operation request may include an acquisition operation request for the specified resource or an updating operation request for the specified resource. Correspondingly, the second entity may determine an operation manner of the acquisition operation request for the specified resource or the updating operation request for the specified resource.

In an exemplary embodiment, the feedback message may include indication information indicating an acquisition failure of the specified resource. In another exemplary embodiment, the feedback message may also or further include indication information indicating that a reason for an acquisition failure of the specified resource is that the operation execution time is ineffective operation execution time.

In an exemplary embodiment, the feedback message may include indication information indicating unconfirmed updating of the specified resource. In another exemplary embodiment, the feedback message may also or further include indication information indicating that a reason for unconfirmed updating of the specified resource is that the operation execution time is ineffective operation execution time. When the resource operation request is the updating operation request for the specified resource, in an exemplary embodiment, after the second entity receives the fed back information, the second entity may cancel to send the resource operation request to the first entity; or, the second entity may send an updated resource operation request to the first entity. The updated resource operation request may include updated operation execution time.

In an exemplary embodiment, the first entity may be a CSE, and the second entity may be an AE or a CSE.

Another embodiment provides another device for processing a resource operation request. The device is arranged to implement the abovementioned embodiment and preferred implementation modes, and what has been described will not be elaborated. For example, term "module", used below, may be a combination of software and/or hardware capable of realizing a preset function. Although the device described in the following embodiment is preferably implemented with software, implementation with hardware or a combination of the software and the hardware is also possible and conceivable.

Fig. 6 is a second structure block diagram of a device for processing a resource operation request according to an embodiment of the present invention. The device is applied to a second entity. As shown in Fig. 6, the device may include a first sending module 62, a receiving module 64 a processing module 66. The first sending module 62 is arranged to send a resource operation request to a first entity. The resource operation request is used for requesting to perform an operation on a specified resource, and the resource operation request carries operation execution time of the operation on the specified resource. The receiving module 64 is arranged to receive a feedback message from the first entity. The feedback message may indicate a processing basis for the second entity to process the resource operation request, and the feedback message is sent to the second entity by the first entity when the first entity determines that the operation execution time does not fall within the effective time length of the specified resource. The processing module 66 is arranged to process the resource operation request according to the processing basis.

In an exemplary embodiment, the resource operation request may include an acquisition operation request for the specified resource or an updating operation request for the specified resource.

In an exemplary embodiment, the feedback message may carry at least one of the following information: indication information indicating an acquisition failure of the specified resource, and/or indication information indicating that a reason for an acquisition failure of the specified resource is that the operation execution time is ineffective operation execution time; or, indication information indicating unconfirmed updating of the specified resource, and/or indication information indicating that a reason for unconfirmed updating of the specified resource is that the operation execution time is ineffective operation execution time.

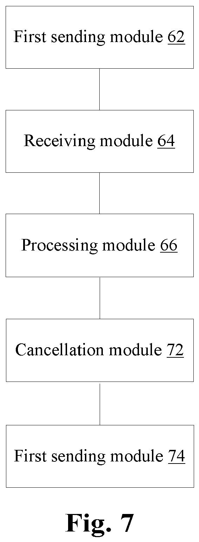

Fig. 7 is a third structure block diagram of a device for processing a resource operation request according to an embodiment of the present invention. As shown in Fig. 7, besides all the modules shown in Fig. 6, the device may further include a cancellation module 72 or a first sending module 74. The cancellation module 72 is arranged to cancel to send the resource operation request to the first entity. The first sending module 74 is arranged to send an updated resource operation request to the first entity. The updated resource operation request may include updated operation execution time.

In an exemplary embodiment, the first entity may be a CSE, and the second entity may be an AE or a CSE.

It may be appreciated that each module may be implemented through software or hardware. The latter condition may be implemented in, but not limited to, the following manner: each module is located in the same processor; or, each module is located in a first processor, a second processor, a third processor...respectively.

Descriptions will be made below with the condition that the first entity is a CSE and the second entity is an AE or a CSE as an example.

A method of an exemplary embodiment may include the following acts.
1. An AE or a CSE sends a resource operation request to a target CSE. The resource operation request may include:
   1) an "operation execution time" parameter, which indicates operation execution time.
2. A local CSE checks whether the resource operation request message includes the "operation execution time" parameter or not, and if the resource operation request includes the "operation execution time" parameter, the local CSE retrieves an "effective time" attribute of a target resource and judges whether effective time of the resource ends earlier than the operation execution time or not, and if the effective time of the resource ends earlier than the operation execution time, the local CSE feeds back a response message of the resource operation request to the AE or the CSE. The response message may include:
   1) a "response state code" parameter, a value of which is set to be "fail"; and
   2) a "content" parameter, a value of which is set to be "ineffective operation execution time".
3. The AE or the CSE cancels the resource operation request.

A method of another exemplary embodiment may include the following acts.
1. An AE or a CSE sends a resource operation request to a target CSE. The resource operation request may include:
   1) an "operation execution time" parameter, which indicates operation execution time.
2. A local CSE checks whether the resource operation request message includes the "operation execution time" parameter or not, and if the resource operation request includes the "operation execution time" parameter, the local CSE retrieves an "effective time" attribute of a target resource and judges whether effective time of the resource ends earlier than operation execution time or not. If the effective time of the resource ends earlier than the operation execution time, the local CSE feeds back a response message of the resource operation request to the AE or the CSE. The response message may include:
   1) a "response state code" parameter, a value of which is set to be "unconfirmed"; and
   2) a "content" parameter, a value of which is set to be "ineffective operation execution time".
3. The AE or the CSE updates the "operation execution time" parameter, and sends the updated "operation execution time" parameter to the target CSE through the resource operation request.
4. The target CSE updates the "operation execution time" parameter in the resource operation request according to the resource operation request message.

### First embodiment

1. An AE or a CSE sends a resource operation request to a target CSE when needing to execute an acquisition operation on a resource "Resource1" on the target CSE. The resource operation request may include:
   1) an address, a value of which is set to be a Uniform Resource Identifier (URI) of the target resource "Resource1";
   2) a request identifier, which identifies the operation requested to be performed on the resource "Resource1";
   3) the operation, which indicates that a type of the operation to be performed by the target CSE on the resource "Resource1" is "acquire"; and
   4) operation execution time, which indicates time when the target CSE performs the acquisition operation on the resource "Resource1".
2. After the AE or the CSE passes authorization and authentication, the target CSE reads the address of the resource "Resource1", and checks whether the request message includes the "operation execution time" parameter or not.
3. If a checking result is that the request message includes the "operation execution time" parameter, the target CSE retrieves an "effective time" attribute of the resource "Resource1" according to the address of the resource "Resource1", reads a value of the "effective time" attribute, and judges whether effective time of the resource ends earlier than the operation execution time or not.
4. if a checking result is that the effective time of the resource ends earlier than the operation execution time, the target CSE feeds back a response message of the resource operation request to the AE or the CSE. The response message may include:
   1) a "request identifier", a value of which is set to be a parameter value of a request identifier parameter in the resource operation request message;
   2) a "response state code", a value of which is set to be "fail" and indicates a result of the resource operation request; and
   3) a "content", a value of which is set to be "ineffective operation execution time" and indicates a reason for a failure of the resource operation request.
5. After receiving the response message of the resource operation request, the AE or the CSE reads the response state code parameter to learn about that the result is "fail", and reads the content parameter to learn about that the reason is "ineffective operation execution time".
6. The AE or the CSE retrieves and cancels the acquisition operation request for the resource "Resource1" according to the request identifier parameter in the response message, and records the operation result.

### Second embodiment

1. An AE or a CSE sends a resource operation request to a target CSE when needing to execute an updating operation on a resource "Resource2" on the target CSE. The resource operation request may include:
   1) an address, a value of which is set to be a URI of the target resource "Resource2";
   2) a request identifier, which identifies the operation requested to be performed on the resource "Resource2";
   3) the operation, which indicates that a type of the operation to be performed by the target CSE on the resource "Resource2" is "update"; and
   4) operation execution time, which indicates time when the target CSE performs the updating operation on the resource "Resource2".
2. After the AE or the CSE passes authorization and authentication, the target CSE reads the address of the resource "Resource2", and checks whether the request message includes the "operation execution time" parameter or not.
3. If a checking result is that the request message includes the "operation execution time" parameter, the target CSE retrieves an "effective time" attribute of the resource "Resource2" according to the address of the resource "Resource2", reads a value of the "effective time" attribute, and judges whether effective time of the resource ends earlier than the operation execution time or not.
4. If a checking result is that the effective time of the resource ends earlier than the operation execution time, the target CSE feeds back a response message of the resource operation request to the AE or the CSE. The response message may include:
   1) a "request identifier", a value of which is set to be a parameter value of a request identifier parameter in the resource operation request message;
   2) a "response state code", a value of which is set to be "unconfirmed" and indicates a result of the resource operation request; and
   3) a "content", a value of which is set to be "ineffective operation execution time", indicates a reason for non-confirmation of the resource operation request and may further include the "effective time" attribute of the resource "Resource2".
□. After receiving the response message of the resource operation request, the AE or the CSE reads the response state code parameter to learn about that the result is "unconfirmed", and reads the content parameter to learn about that the reason is "ineffective operation execution time".
6. The AE or the CSE parses an attribute value of the "effective time" attribute of the resource "Resource2" in the content parameter, retrieves and updates the "operation execution time" parameter of the updating operation on the resource "Resource2" according to the request identifier parameter in the response message, and sends the updated "operation execution time" parameter to the target CSE through the resource operation request. The resource operation request message may include:
   1) an address, the value of which is set to be the URI of the target resource "Resource2";
   2) a request identifier, which identifies the parameter value of the request identifier parameter in the resource operation response message; and
   3) an operation execution time, which indicates updated time when the target CSE performs the updating operation on the resource "Resource2".
7. After receiving the resource operation request, the target CSE reads address of the resource "Resource2", retrieves and updates the "operation execution time" parameter of the updating operation on the resource "Resource2" according to the request identifier parameter, and feeds back a response message of the resource operation request to the AE or the CSE. The response message may include:
   1) a "request identifier", a value of which is set to be a parameter value of a request identifier parameter in the resource operation request message; and
   2) a "response state code", a value of which is set to be "confirmed".
8. The AE or the CSE retrieves and updates the updating operation request related to the resource "Resource2" according to the request identifier parameter in the response message, and records an operation state.
9. The target CSE performs the updating operation on the resource "Resource2" according to the updated "operation execution time" parameter, and feeds back an operation execution result to the AE or the CSE through a resource operation request response.

From the above, by the methods for processing the resource operation request provided by the embodiments of the present invention, the disorder between the effective time of the resource and the execution time of the operation may be avoided, so that effective execution of the resource operation request may be ensured.

In another embodiment, software is further provided, which is arranged to execute the technical solutions described in the abovementioned embodiments and preferred implementation modes.

In another embodiment, a storage medium is further provided, in which the abovementioned software is stored, the storage medium including, but not limited to: an optical disk, a floppy disk, a hard disk, an erasable memory and the like.

Obviously, those skilled in the art should know that each module or each act of the present invention may be implemented by a universal computing device, and the modules or acts may be concentrated on a single computing device or distributed on a network formed by a plurality of computing devices, and may optionally be implemented by program codes executable for the computing devices, so that the modules or acts may be stored in a storage device for execution with the computing devices, the shown or described acts may be executed in sequences different from those described here in some circumstances, or may form each integrated circuit module respectively, or multiple modules or acts therein may form a single integrated circuit module for implementation. As a consequence, the present invention is not limited to any specific hardware and software combination.

The above is only the preferred embodiment of the present invention and not intended to limit the present invention. For those skilled in the art, the present invention may have various modifications and variations. Any modifications, equivalent replacements, improvements and the like made within the principle of the present invention shall fall within the scope of protection defined by the appended claims of the present invention.

### Industrial Applicability

As mentioned above, the methods for processing the resource operation request provided by the embodiments of the present invention have the following beneficial effects: the disorder between the effective time of the resource and the execution time of the operation may be avoided, so that effective execution of the resource operation request may be ensured.

## Claims

1. A method for processing a resource operation request, comprising:
receiving, by a first entity, a resource operation request from a second entity, wherein the resource operation request is used for requesting to perform an operation on a specified resource, and the resource operation request carries operation execution time of the operation on the specified resource;
acquiring, by the first entity, an effective time length of the specified resource; and sending, by the first entity, a feedback message to the second entity when the first entity determines that the operation execution time does not fall within the effective time length, wherein the feedback message indicates a processing basis for the second entity to process the resource operation request.

2. The method as claimed in claim 1, wherein the resource operation request comprises an acquisition operation request for the specified resource or an updating operation request for the specified resource.

3. The method as claimed in claim 2, wherein the feedback message carries at least one of the following information:
indication information indicating an acquisition failure of the specified resource, and/or indication information indicating that a reason for an acquisition failure of the specified resource is that the operation execution time is ineffective operation execution time; or,
indication information indicating unconfirmed updating of the specified resource, and/or indication information indicating that a reason for unconfirmed updating of the specified resource is that the operation execution time is ineffective operation execution time.

4. The method as claimed in claim 3, after sending, by the first entity, the feedback message to the second entity, comprising:
receiving, by the first entity, an updated resource operation request from the second entity, wherein the updated resource operation request carries updated operation execution time.

5. The method as claimed in claim 1, wherein acquiring, by the first entity, the effective time length of the specified resource comprises:
retrieving, by the first entity, an "effective time" attribute of the specified resource, and acquiring, by the first entity, the effective time length of the specified resource from the "effective time" attribute.

6. The method as claimed in any one of claims 1 to 5, wherein the first entity is a Common Services Entity, CSE, and the second entity is an Application Entity, AE, or a CSE.

7. A method for processing a resource operation request, comprising:
sending, by a second entity, a resource operation request to a first entity, wherein the resource operation request is used for requesting to perform an operation on a specified resource, and the resource operation request carries operation execution time of the operation on the specified resource;
receiving, by the second entity, a feedback message from the first entity, wherein the feedback message indicates a processing basis for the second entity to process the resource operation request, and the feedback message is sent to the second entity by the first entity when the first entity determines that the operation execution time does not fall within effective time length of the specified resource; and
processing, by the second entity, the resource operation request according to the processing basis.

8. The method as claimed in claim 7, wherein the resource operation request comprises an acquisition operation request for the specified resource or an updating operation request for the specified resource.

9. The method as claimed in claim 8, wherein the feedback message carries at least one of the following information:
indication information indicating an acquisition failure of the specified resource, and/or indication information indicating that a reason for an acquisition failure of the specified resource is that the operation execution time is ineffective operation execution time; or,
indication information indicating unconfirmed updating of the specified resource, and/or indication information indicating that a reason for unconfirmed updating of the specified resource is that the operation execution time is ineffective operation execution time.

10. The method as claimed in claim 9, after receiving, by the second entity, the feedback message from the first entity, comprising:
canceling, by the second entity, to send the resource operation request to the first entity; or,
sending, by the second entity, an updated resource operation request to the first entity, wherein the updated resource operation request comprises updated operation execution time.

11. The method as claimed in any one of claims 7 to 10, wherein the first entity is a Common Services Entity, CSE, and the second entity is an Application Entity, AE, or a CSE.

12. A device for processing a resource operation request, applied to a first entity and comprising:
a first receiving module, arranged to receive a resource operation request from a second entity, wherein the resource operation request is used for requesting to perform an operation on a specified resource, and the resource operation request carries operation execution time of the operation on the specified resource;
an acquisition module, arranged to acquire an effective time length of the specified resource; and
a sending module, arranged to send a feedback message to the second entity when determining that the operation execution time does not fall within the effective time length, wherein the feedback message indicates a processing basis for the second entity to process the resource operation request.

13. The device as claimed in claim 12, wherein the resource operation request comprises an acquisition operation request for the specified resource or an updating operation request for the specified resource.

14. The device as claimed in claim 13, wherein the feedback message carries at least one of the following information:
indication information indicating an acquisition failure of the specified resource, and/or indication information indicating that a reason for an acquisition failure of the specified resource is that the operation execution time is ineffective operation execution time; or,
indication information indicating unconfirmed updating of the specified resource, and/or indication information indicating that a reason for unconfirmed updating of the specified resource is that the operation execution time is ineffective operation execution time.

15. The device as claimed in claim 14, further comprising:
a second receiving module, arranged to receive an updated resource operation request from the second entity, wherein the updated resource operation request carries updated operation execution time.

16. The device as claimed in claim 12, wherein the acquisition module is arranged to retrieve an "effective time" attribute of the specified resource and acquire the effective time length of the specified resource from the "effective time" attribute.

17. The device as claimed in any one of claims 12 to 16, wherein the first entity is a Common Services Entity, CSE, and the second entity is an Application Entity, AE, or a CSE.

18. A device for processing a resource operation request, applied to a second entity and comprising:
a first sending module, arranged to send a resource operation request to a first entity, wherein the resource operation request is used for requesting to perform an operation on a specified resource, and the resource operation request carries operation execution time of the operation on the specified resource;
a receiving module, arranged to receive a feedback message from the first entity, wherein the feedback message indicates a processing basis for the second entity to process the resource operation request, and the feedback message is sent to the second entity by the first entity when the first entity determines that the operation execution time does not fall within effective time length of the specified resource; and
a processing module, arranged to process the resource operation request according to the processing basis.

19. The device as claimed in claim 18, wherein the resource operation request comprises an acquisition operation request for the specified resource or an updating operation request for the specified resource.

20. The device as claimed in claim 19, wherein the feedback message carries at least one of the following information:
indication information indicating an acquisition failure of the specified resource, and/or indication information indicating that a reason for an acquisition failure of the specified resource is that the operation execution time is ineffective operation execution time; or,
indication information indicating unconfirmed updating of the specified resource;
indication information indicating that a reason for unconfirmed updating of the specified resource is that the operation execution time is ineffective operation execution time.

21. The device as claimed in claim 20, further comprising:
a cancellation module, arranged to cancel to send the resource operation request to the first entity; or,
the first sending module, arranged to send an updated resource operation request to the first entity, wherein the updated resource operation request comprises updated operation execution time.

22. The device as claimed in any one of claims 18 to 21, wherein the first entity is a Common Services Entity, CSE, and the second entity is an Application Entity, AE, or a CSE.
